# EUROPÄISCHE PATENTANMELDUNG

(11) **EP 1 047 085 A2**
(43) Veröffentlichungstag der Anmeldung: **25.10.2000**
(21) Anmeldenummer: 00107228.9
(22) Anmeldetag: 01.04.2000
(51) Int. Cl.: H01F 7/02

(54) **Sich in Längsrichtung ertreckendes magnetisches Element**

(30) Priorität: 21.04.1999 DE 29907074 U; 07.02.2000 DE 10005890
(71) Anmelder: SIKO GmbH Dr. Ing. G. Wandres, 79256 Kirchzarten/Buchenbach (DE)
(72) Erfinder: Wandres, Horst, 79256 Buchenbach (DE)
(74) Vertreter: Weiss, Peter, Dr.

(57) **Zusammenfassung**

Bei einem siich in Längsrichtung erstreckendes Element, insbesondere ein biegsamer Draht, eine Schnur, Seil od. dgl., soll in oder auf einen Grundkörper ein magnetischer Werkstoff ein- und/oder aufgebracht sein.

## Beschreibung

Die Erfindung betrifft ein sich in Längsrichtung erstreckendes Element, insbesondere einen biegsamen Draht, eine Schnur, Seil od. dgl..

In vielen Fällen des täglichen Lebens wird ein Draht, eine Schnur, ein Seil od. dgl. benötigt. Beim Draht handelt es sich in der Regel um einen Metalldraht, der bspw. mit einer Kunststoffbeschichtung ummantelt sein kann. Die Schnur bzw. Seil sind oftmals Textilgebilde.

Der vorliegenden Erfindung liegt die Aufgabe zugrunde, ein sich in Längsrichtung erstreckendes Element zu entwickeln, welches vielfältig einsetzbar ist.

Zur Lösung dieser Aufgabe führt, dass in oder auf einem Grundkörper ein magnetischer Werkstoff ein- und/oder aufgebracht ist.

Dieser magnetische Werkstoff hat den Vorteil, dass bspw. Messgeräte auf ihn ansprechen. Damit ist es möglich, diese sich in Längsrichtung erstreckende Element als Maßstab für viele Zwecke zu benutzen. Nur beispielhaft wird auf ein magnetisches Drahtseil verwiesen, welches in Aufzugmeßsystemen Verwendung finden kann. Infolge des sinusförmigen Verlaufes der magnetischen Strahlung können Endlagen od. dgl. auf einfachste Weise bestimmt werden. Die Erfindung ist aber so vielfältig anwendbar, sei es in der Lagertechnik, Fördertechnik und in vielen anderen industriellen Bereichen, dass auf eine spezielle Ausführungsbeschreibung verzichtet wird.

Die Anwendungsmöglichkeit beschränkt sich auch nicht auf irgendwelche Meßsysteme, sondern bspw. kann sich ein in Längsrichtung erstreckendes Element auch als Dichtung Anwendung finden, wobei besonders hervor zu heben ist, dass durch den magnetischen Werkstoff ein Anhaften der Dichtung an einem metallischen Gegenstand verbessert ist.

Bei dem sich in Längsrichtung erstreckenden Element handelt es sich bevorzugt um ein flexibles Element, mit dem jeder Radius zu fahren ist.

Der magnetische Werkstoff kann selbst in den Grundkörper eingebracht sein. Er kann aber auch eine magnetische Beschichtung darstellen oder in eine Beschichtung aus einem anderen Material, bspw. aus Kunststoff integriert sein. Selbst mit einem Lack kann er aufgetragen werden.

Im Rahmen der Erfindung ist auch daran gedacht, das Magnetfeld für andere Zwecke nutzbar zu machen. Beispielsweise kann durch Änderung des Magnetfeldes eine Kodierung für einen bestimmten Zweck erfolgen.

Es ist auch möglich den magnetischen Werkstoff ringförmig auf oder bspw. in eine Beschichtung einzubringen. Auch diese kann für bestimmte Zwecke, bspw. für eine Kodierung geeignet sein.

Handelt es sich bei dem Draht (erstreckende Element) um einen elektrischen Leiter, können je nach Wahl der Kodierung der magnetischen Schicht, die zugleich als Isolator wirken kann, die elektromagnetischen Eigenschaften des Leiters beeinflusst werden.

## Patentansprüche

1. Sich in Längsrichtung erstreckendes Element, insbesondere ein biegsamer Draht, eine Schnur, Seil od. dgl.
dadurch gekennzeichnet,
dass in oder auf einen Grundkörper ein magnetischer Werkstoff ein- und/oder aufgebracht ist.

2. Element nach Anspruch 1, dadurch gekennzeichnet, dass die magnetische Beschichtung aus einer mit einem magnetischen Werkstoff versetzten Kunststoffummantelung besteht.

3. Element nach Anspruch 1, dadurch gekennzeichnet, dass auf dem Grundkörper ein mit dem magnetischen Werkstoff versetzter Lack aufgebracht ist.

4. Element nach einem der Ansprüche 1 bis 3, dadurch gekennzeichnet, dass durch Änderung des Magnetfeldes eine Kodierung erfolgt.

5. Element nach wenigstens einem der Ansprüche 1 bis 4, dadurch gekennzeichnet, dass der magnetische Werkstoff ringförmig aufgebracht ist.
